# EUROPEAN PATENT SPECIFICATION

(11) **EP 2 750 565 B1**
(45) Date of publication and mention of the grant of the patent: **04.03.2015**
(21) Application number: 12815802.9
(22) Date of filing: 05.12.2012
(51) Int. Cl.: A47J 36/24

(54) **BABY BOTTLE WARMER**
BABYFLASCHENWÄRMER
CHAUFFE-BIBERON

(30) Priority: 09.12.2011 US 201161568663 P; 09.12.2011 EP 11192793
(43) Date of publication of application: 09.07.2014
(73) Proprietor: Koninklijke Philips N.V., 5656 AE Eindhoven (NL)
(72) Inventor: KOOIJKER, Klaas, NL-5656 AE Eindhoven (NL); STOLK, Theodoor, NL-5656 AE Eindhoven (NL); VAN DER KAMP, Gertrude, Riëtte, NL-5656 AE Eindhoven (NL)
(74) Representative: Coops, Peter
(86) International application number: PCT/IB2012/056984
(87) International publication number: WO 2013/084161

(56) References cited:
- WO-A1-93/20735
- WO-A1-2011/128467
- US-A- 2 992 316
- US-A1- 2003 222 075

## Description

### FIELD OF THE INVENTION

The present invention relates to a baby bottle warmer.

### BACKGROUND OF THE INVENTION

Babies and young infants are commonly fed milk and other food products from a bottle as a supplement or substitute for breast milk. When breast feeding, breast milk is consumed by the baby at the internal temperature of the mother, around 37°C. So it is necessary to heat the milk contained in a baby bottle to meet this temperature otherwise it may be rejected by the baby. If the milk is too cold the baby may reject the milk or may be in some discomfort from consuming cold milk. If the milk is too hot, the baby may be injured.

So, prior to feeding, the baby bottle and the contents must be heated to approximately 37°C. Many products exist that receive a baby bottle and heat it, along with its contents, to the required temperature. A typical example is US 2007/0280657 A1, which has two heating zones and uses a timer and thermostat system to control a heating element and heat the milk contained in the bottle.

The problem with the majority of existing products is an uneven heat distribution through the milk. When a baby bottle resides in an upright position and is heated from below the hotter milk is more buoyant, and so will rise to the top, and the cooler milk will move downwards. This causes heat stratification of the milk which can be dangerous to feed to babies as some parts of the milk may be significantly hotter than others. Known ways to counter this problem are to stir or mix the milk during heating or to shake or vibrate the milk whilst it is being heated. Stirring requires inserting something into the milk, such as a spatula, creating hygiene and cleaning problems. Shaking or vibrating requires an added complexity to the baby bottle heater and could be noisy or inconvenient.

It is known, for example from WO 2011/128467 A1, to provide a baby bottle warmer comprising a body positionable, when in use, on a level supporting surface such as a table, the body having a chamber to receive a baby bottle to be warmed, said chamber comprising a base wall and a cylindrical side wall configured to support a bottle received in the chamber at an angle relative to the supporting surface on which the body is positioned, the baby bottle warmer also comprising a heater.

It is known to use water to surround the baby bottle during heating, to aid heat transfer from a heater to the baby bottle. A problem with existing products using this method is that when the required temperature is reached and the heater is turned off, the water surrounding the baby bottle will still hold a significant amount of heat and so the baby bottle temperature may continue to increase. The baby bottle warmer known from US 2,992,316 seeks to alleviate this problem by providing a device which raises the baby bottle out of the water and so away from the heating area once the required temperature is reached, to prevent further heating and indicate to the user that the heating process has finished.

The present invention seeks to overcome or substantially alleviate the problems referred to above and to provide effective heat distribution and accurate control of the temperature throughout the contents of a baby bottle.

### SUMMARY OF THE INVENTION

According to the invention, there is provided a baby bottle warmer comprising a body positionable, when in use, on a level supporting surface such as a table, the body having a chamber to receive a baby bottle to be warmed, said chamber being configured such that a bottle received in the chamber is supported at an angle relative to the supporting surface on which the body is positioned, said chamber also comprising a base wall and a side wall, the baby bottle warmer also comprising a heater, characterised in that the heater is positioned at or adjacent to the base wall of the chamber such that heating of the baby bottle mixes the contents of the baby bottle.

In one embodiment, the heater is positioned at or adjacent to the lowest point of the chamber between the base and the side wall such that heating of the baby bottle mixes the contents of the baby bottle.

In one embodiment, the chamber may comprise bottle support elements configured to support a bottle received in the chamber at an angle.

Preferably, the base and side wall are configured to support a bottle received in the chamber at an angle in addition to, or instead of, bottle support elements.

The advantage of heating the bottle in an inclined position is that the convection currents within the liquid contents of the bottle encourage mixing. The inclined position means that there is an angled surface (the side of the baby bottle) immediately above of the heating area. This creates a natural mixing effect as the contents are heated and prevents stratification of the liquid.

The baby bottle warmer may comprise a lifting member operable to lift a bottle at least partly out of the chamber to prevent further heating of the bottle.

In this embodiment the lifting member is configured such that it lifts a bottle at least partially out of the chamber when the contents of the bottle has reached a predetermined temperature or, after a predetermined time has elapsed.

The advantage of lifting the baby bottle at least partly out of the chamber once the heating cycle has completed is that overheating of the bottle is avoided. Also, the position of the bottle can act as a signal to the user that the heating cycle is complete. Most preferably, the lifting member lifts the bottle by at least a distance sufficient to remove the bottle from the water in the chamber and through which heat is transferred from the heater to the bottle and its contents. If the bottle is clear of the water, then the bottle will no longer be heated by the heater and overheating of the contents of the bottle will be substantially prevented.

A motor may drive the lifting member and a user control button to operate the motor.

In another embodiment the lifting member includes a spring and a spring catch configured such that, when a user inserts a bottle into the chamber, they push it down against a bias provided by the spring until the catch engages, said catch being released when a predetermined temperature has been reached or when a predetermined time has elapsed.

Preferably a heater heats a predetermined quantity of water placed in the chamber prior to insertion of a bottle to be heated, said heater being positioned at or adjacent to the lowest point in the chamber between the base and the side wall.

In another embodiment, the baby bottle warmer may comprise a water reservoir connected to the chamber such that water in the water reservoir flows into the chamber until the water in the chamber reaches a predetermined level, prior to insertion of a bottle into the chamber. Although this feature is considered to be a preferable feature to the baby bottle warmer already defined above, it is also envisaged that this feature alone provides an advantage over known baby bottle warmers because it does not require the user to re-fill the chamber with water prior to each use of the baby bottle heater. Furthermore, it also ensures that the chamber contains exactly the correct quantity of water to provide the desired heat transfer from the heater to the bottle and its contents. Therefore, according to another aspect of the invention, there is also provided a baby bottle warmer having a chamber to receive a baby bottle to be heated and comprising a water reservoir connected to the chamber such that water in the water reservoir flows into the chamber until the water in the chamber reaches a predetermined level, prior to insertion of a bottle into the chamber.

In either aspect of the invention, the reservoir is preferably positioned above the chamber such that water flows freely under gravity from the reservoir into the chamber until a predetermined water level has been reached.

The baby bottle warmer may comprise a pipe connecting the water reservoir to an inlet in the chamber, said water reservoir being otherwise sealed such that water flows into the chamber in one direction, and air flows into the reservoir in the opposite direction via said pipe, until the water level in the chamber rises above the inlet and so prevents the passage of air back into the reservoir. This has the advantage that the operation takes place automatically, without any need for user interaction (beyond ensuring that the water reservoir contains water) and always provides the same amount of water into the chamber.

The chamber may have a side wall and a base and said inlet may be formed in said side wall spaced from the base. The layer of water between the baby bottle and the walls of the heating chamber creates an efficient heat transfer medium. The amount of water fed into the heating chamber will determine the size of the heating area and therefore the speed of the heating process. Water is a far more efficient medium for heat transfer than air and has no negative side effects in terms of cost, health and safety or hygiene.

### BRIEF DESCRIPTION OF THE DRAWINGS

Preferred embodiments will now be described, by way of example only, with reference to the accompanying drawings, in which:
Figure 1 shows a cross-sectional view of a first embodiment of the invention.
Figure 2a shows a cross-sectional view of a second embodiment.
Figure 2b shows the embodiment of Figure 2a.
Figure 2c shows the embodiment of Figures 2a and 2b.
Figure 3 shows a cross-sectional view of the embodiment of Figure 1 including the bottle.
Figure 4a shows a cross-sectional view of a third embodiment.
Figure 4b shows the embodiment of Figure 4a.

### DETAILED DESCRIPTION

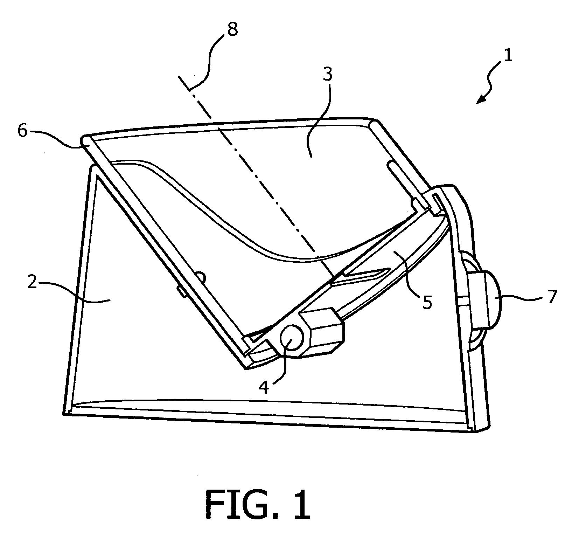

Referring to the drawings, Figure 1 shows a baby bottle heater 1 comprising at least a main body 2, a heating chamber 3 and a heating element 4.

The heating chamber 3 is formed by a cylindrical recess formed of two walls; a circular base wall 5 and a cylindrical side wall 6 extending from the peripheral edge of the base wall 5 to from the cylindrical recess.

The heating chamber 3 forms a part of the main body 2 so that it is accessible from the top of the baby bottle heater device 1. The main body 2 houses any controls 7, displays and any electrical circuitry (not shown) relating to the baby bottle heater 1.

The heating chamber 3 is located in the main body 2 such that the main longitudinal axis 8 of the cylindrical recess is angled relative to the vertical when the main body 2 when placed on a level surface, such as a table top, in its normal operational position.

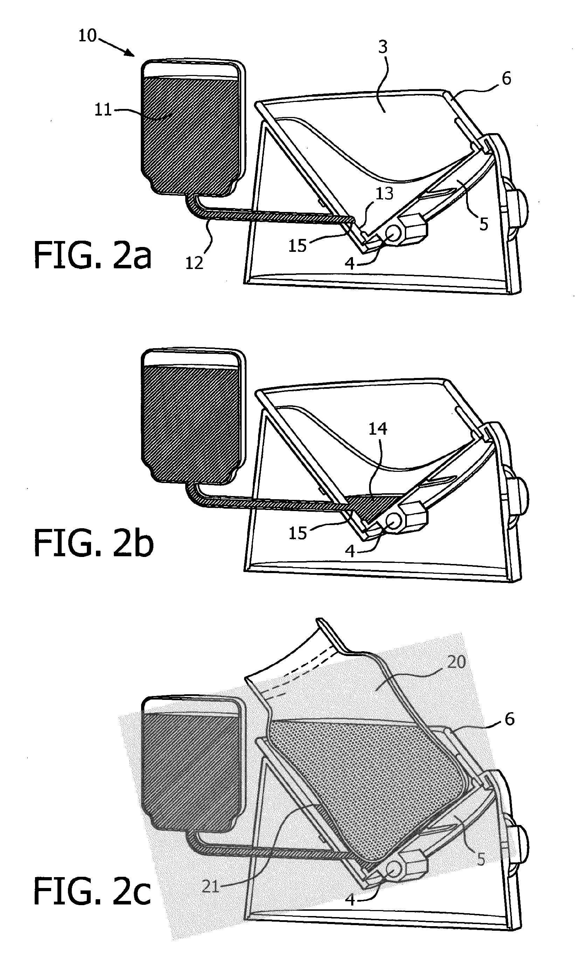

Figures 2a, 2b and 2c show a water feeding assembly 10 mounted to the baby bottle heater, comprising a sealed water storage area or reservoir 11, such as a water tank with an air tight removable lid, which is connected, via a pipe 12, to the heating chamber 3 at an outlet 15. The pipe 12 allows water to pass from the water tank 11 into the heating chamber 3, where it naturally flows to the lowest point 13 of heating chamber 3, as formed by the base wall 5 and the cylindrical side wall 6. When the level of the water 14 in the heating chamber 3 is below the outlet 15 of the pipe 12 air may flow from the heating chamber 3, which is open to the atmosphere, up the connecting pipe 12 to the water tank 11 such that the water tank 11 is sealed from the atmosphere except via the pipe 12.

As shown in Figure 2b, when the water level 14 in the heating chamber 3 reaches a level such that air is prevented from moving from the heating chamber 3 into the water tank 11, the flow of water is stopped and the water level 14 in the heating chamber 3 remains constant. The outlet 15 of the pipe 12 may be configured so that an appropriate amount of water is always present in the heating chamber 3.

Figure 2c shows the baby bottle heater 1 when a baby bottle 20 has been inserted into the heating chamber 3. The baby bottle 20 has a substantially cylindrical body and so closely, but not exactly, fits the cylindrical recess of the heating chamber 3. The baby bottle 20 displaces the water in the heating chamber 3 such that the water forms a thin layer 21 between the baby bottle 20 and the walls 5, 6 of the heating chamber 3. This layer of water 21 allows efficient heat transfer between the walls 5, 6 of the heating chamber 3 and the baby bottle 20.

The heating element 4, as shown in all Figures, is located adjacent to the base wall 5 of the heating chamber 3, but may be located anywhere in this vicinity. The heating element 4, probably electrically powered, creates heat that causes the temperature of the heating chamber walls 5, 6 to rise, which in turn causes heat transfer to the baby bottle 20, via the layer of water 21 between the baby bottle 20 and the walls of the heating chamber 5, 6. The layer of water 21 is significantly more efficient at transferring heat than an air gap would be.

The location of the heating element 4, the angle of the heating chamber 3 and the layer of water 21 between the baby bottle 20 and the walls 5, 6 of the heating chamber 3 cause the baby bottle 20 to be heated mainly from one side and across the base of the baby bottle, as defined by the extent of the layer of water 21.

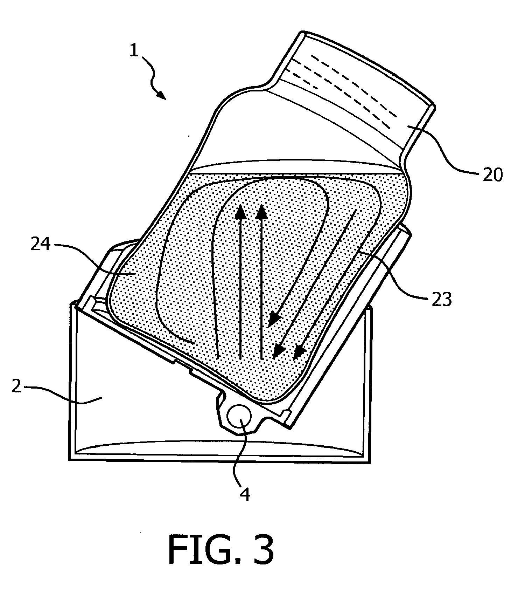

Figure 3 shows heat convection currents 23 within a liquid 24 in the baby bottle 20, as a result of the heating process. The convection currents 23 create a non-uniform horizontal buoyancy of the liquid 20, create a natural mixing effect and so prevent heat stratification and ensure a mostly uniform heat distribution throughout the liquid 20. It is likely that the features of a baby bottle heater 1 described above will be implemented with more traditional elements of baby bottle heaters such as controls to set either time of heating or required temperature and a thermostat to enable automatic switching off of the heater element 4.

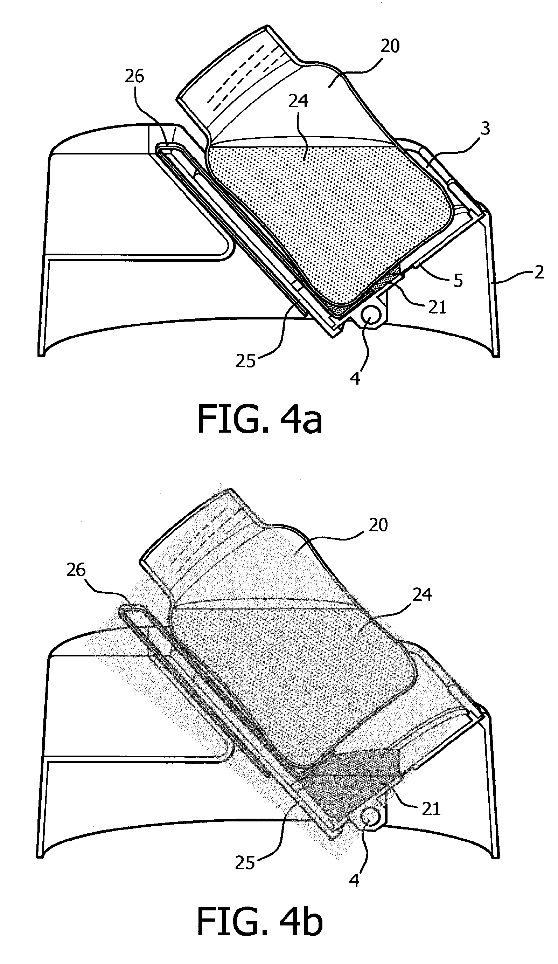

Figures 4a and 4b show the baby bottle heater 1 with a heating chamber 3 further comprising a fixed member 25, to which the heating element 4 is attached, and a sliding member 26, which holds the baby bottle 20 and which is slideable relative to the fixed member 25 of the heating chamber 3. Figure 4a shows the baby bottle heater 1 during the heating process, with the sliding member 25 lowered such that the baby bottle 20 is in contact with the water 21 and hence can be heated. Figure 4b shows the baby bottle heater 1 at the end of the heating process, where the sliding member 26 is slid such that the baby bottle 20 is not in contact with the water 21, or the heating element 4, and so is not being heated. This enables the baby bottle 20 to be slid clear of the heating area and out of the water once the liquid 24 has reached the required temperature. This will prevent excessive heating of the liquid 24, eliminate the need to lower the temperature of the heating element 4 in the final part of the heating process and give the user a clear indication of when the heating process is complete.

In one embodiment, a thermostat and actuation assembly would be required to realise this sliding design. The thermostat will give a signal to the actuator when the liquid has reached the required temperature and the actuator will slide the sliding member 26 and so lift the baby bottle 20 away from the heating element 4. However, the sliding mechanism may also be manually operated.

The actuator may comprise an electric motor with a transmission system such as a gear set or linear actuator to moveably slide the sliding member 26. The actuator may instead comprise a spring and catch assembly, which would require the user to push the baby bottle 20 and the sliding assembly down towards the heating element to compress the spring and engage the catch. A thermostat will cause the catch to disengage at the relevant temperature and so the spring will actuate the sliding assembly and raise the baby bottle 20 away from the heating element 4.

It will be appreciated that the term "comprising" does not exclude other elements or steps and that the indefinite article "a" or "an" does not exclude a plurality. The mere fact that certain measures are recited in mutually different dependent claims does not indicate that a combination of these measures cannot be used to an advantage. Any reference signs in the claims should not be construed as limiting the scope of the claims.

Other modifications and variations falling within the scope of the claims hereinafter will be evident to those skilled in the art.

## Claims

1. A baby bottle warmer comprising a body (2) positionable, when in use, on a level supporting surface such as a table, the body (2) having a chamber (3) to receive a baby bottle to be warmed, said chamber (3) being configured such that a bottle received in the chamber (3) is supported at an angle relative to the supporting surface on which the body (2) is positioned, said chamber (3) also comprising a base wall (5) and a side wall (6), the baby bottle warmer also comprising a heater (4), **characterised in that** the heater (4) is positioned at or adjacent to the base wall of the chamber such that heating of the baby bottle mixes the contents of the baby bottle.

2. A baby bottle warmer according to claim 1, wherein the heater is positioned at or adjacent to the lowest point of the chamber between the base wall and the side wall such that heating of the baby bottle mixes the contents of the baby bottle.

3. A baby bottle warmer according to claim 1 or 2, wherein the chamber comprises bottle support elements configured to support a bottle received in the chamber at an angle.

4. A baby bottle warmer according to claim 3, wherein the base wall (5) and side wall (6) are configured to support a bottle received in the chamber (3) at an angle.

5. A baby bottle warmer, according to any preceding claim, comprising a lifting member (26) operable to lift a bottle (20) at least partly out of the chamber (3) to prevent further heating of the bottle (20).

6. A baby bottle warmer according to claim 5, wherein the lifting member (26) is configured such that it lifts a bottle (20) at least partially out of the chamber (3) when the contents (24) of the bottle (20) has reached a predetermined temperature or, after a predetermined time has elapsed.

7. A baby bottle warmer according to claim 5 or 6, comprising a motor to drive the lifting member (26) and a user control button to operate the motor.

8. A baby bottle warmer according to claim 5, 6 or 7, wherein the lifting member (26) includes a spring and a spring catch configured such that, when a user inserts a bottle (20) into the chamber (3) and push it down against a bias so that the spring catch engages, the catch is released when a predetermined temperature has been reached or when a predetermined time has elapsed.

9. A baby bottle warmer according to any of claims 1 to 8, wherein the heater (4) heats a predetermined quantity of water (14) placed in the chamber (3) prior to insertion of a bottle (20) to be heated, such that when the bottle (20) is inserted into the chamber (3), the water (14) forms a layer (21) between the bottle (20) and the walls (5, 6) of the chamber (3).

10. A baby bottle warmer according to any of claims 1 to 8, wherein the chamber (3) is cylindrical and the heater (4) is offset from the longitudinal axis of the chamber (3).

11. A baby bottle warmer according to any preceding claim, further comprising a water reservoir (11) connected to the chamber (3) such that water in the water reservoir (11) flows into the chamber (3) until the water (14) in the chamber (3) reaches a predetermined level, prior to insertion of a bottle (20) into the chamber (3).

12. A baby bottle warmer according to claim 10, wherein the reservoir (11) is positioned above the chamber (3) such that water flows freely under gravity from the reservoir (11) into the chamber (3) until a predetermined water level has been reached.

13. A baby bottle warmer according to claim 10 or 11, comprising a pipe (12) connecting the water reservoir (11) to an inlet (15) in the chamber (3), said water reservoir (11) being otherwise sealed such that water flows into the chamber (3) in one direction, and air flows into the reservoir (11) in the opposite direction via said pipe (15), until the water level in the chamber (3) rises above the inlet (15) and so prevents the passage of air back into the reservoir (11).

14. A baby bottle warmer according to claim 13, wherein the chamber (3) has a side wall (6) and a base (5) and said inlet (15) is formed in said side wall (6) spaced from the base (5).

## Patentansprüche

1. Babyflaschenwärmer, umfassend einen Körper (2) der, wenn er in Verwendung ist, auf einer ebenen Tragfläche wie z.B. einem Tisch positioniert werden kann, wobei der Körper (2) eine Kammer (3) aufweist, um eine Babyflasche aufzunehmen, die erwärmt werden soll, wobei die Kammer (3) derart konfiguriert ist, dass eine Flasche, die in der Kammer (3) aufgenommen ist, in einem Winkeln mit Bezug auf die Tragfläche, auf der der Körper (2) positioniert ist, getragen wird, wobei die Kammer (3) auch eine Basiswand (5) und eine Seitenwand (6) umfasst, wobei der Babyflaschenwärmer auch ein Heizgerät (4) umfasst, **dadurch gekennzeichnet, dass** das Heizgerät (4) an oder benachbart zu der Basiswand der Kammer positioniert ist, so dass die Erwärmung der Babyflasche den Inhalt der Babyflasche mischt.

2. Babyflaschenwärmer nach Anspruch 1, wobei das Heizgerät an oder benachbart zu dem niedrigsten Punkt der Kammer zwischen der Basiswand und der Seitenwand positioniert ist, so dass die Erwärmung der Babyflasche den Inhalt der Babyflasche mischt.

3. Babyflaschenwärmer nach Anspruch 1 oder 2, wobei die Kammer Flaschentrageelemente umfasst, die konfiguriert sind, um eine Flasche, die in der Kammer aufgenommen ist, in einem Winkel zu tragen.

4. Babyflaschenwärmer nach Anspruch 3, wobei die Basiswand (5) und die Seitenwand (6) konfiguriert sind, um eine Flasche, die in der Kammer (3) aufgenommen ist, in einem Winkel zu tragen.

5. Babyflaschenwärmer nach einem der vorhergehenden Ansprüche, umfassend ein Hebeelement (26), das betriebsbereit ist, um eine Flasche (20) mindestens teilweise aus der Kammer (3) zu heben, um eine weitere Erwärmung der Flasche (20) zu verhindern.

6. Babyflaschenwärmer nach Anspruch 5, wobei das Hebeelement (26) derart konfiguriert ist, das es eine Flasche (20) mindestens teilweise aus der Kammer (3) hebt, wenn der Inhalt (24) der Flasche (20) eine vorbestimmte Temperatur erreicht hat, oder nachdem eine vorbestimmte Zeit abgelaufen ist.

7. Babyflaschenwärmer nach einem der Ansprüche 5 oder 6, umfassend einen Motor, um das Hebeelement (26) anzutreiben, und einen Benutzer-Steuerknopf, um den Motor zu betreiben.

8. Babyflaschenwärmer nach Anspruch 5, 6 oder 7, wobei das Hebeelement (26) eine Feder und einen Schnappverschluss umfasst, die konfiguriert sind um, wenn ein Benutzer eine Flasche (20) in die Kammer (3) einführt und nach unten gegen eine Vorspannung schiebt, so dass der Schnappverschluss eingreift, der Verschluss freigegeben wird, wenn eine vorbestimmte Temperatur erreicht wurde, oder wenn eine vorbestimmte Zeit abgelaufen ist.

9. Babyflaschenwärmer nach einem der Ansprüche 1 bis 8, wobei das Heizgerät (4) eine vorbestimmte Menge Wasser (14) erwärmt, das in die Kammer (3) gegeben wird, bevor eine Flasche (20) eingeführt wird, die erwärmt werden soll, so dass, wenn die Flasche (20) in die Kammer (3) eingeführt wird, das Wasser (14) eine Schicht (21) zwischen der Flasche (20) und den Wänden (5, 6) der Kammer (3) bildet.

10. Babyflaschenwärmer nach einem der Ansprüche 1 bis 8, wobei die Kammer (3) zylindrisch ist und das Heizgerät (4) von der Längsachse der Kammer (3) versetzt ist.

11. Babyflaschenwärmer nach einem der vorhergehenden Ansprüche, weiter umfassend einen Wasserbehälter (11), der mit der Kammer (3) verbunden ist, so dass Wasser im Wasserbehälter (11) in die Kammer (3) fließt, bis das Wasser (14) in der Kammer (3) ein vorbestimmtes Niveau erreicht, bevor eine Flasche (20) in die Kammer (3) eingeführt wird.

12. Babyflaschenwärmer nach Anspruch 10, wobei der Behälter (11) über der Kammer (3) angeordnet ist, so dass Wasser frei unter der Schwerkraft aus dem Behälter (11) in die Kammer (3) fließt, bis ein vorbestimmtes Wasserniveau erreicht wird.

13. Babyflaschenwärmer nach Anspruch 10 oder 11, umfassend ein Rohr (12), das den Wasserbehälter (11) mit einem Einlass (15) in der Kammer (3) verbindet, wobei der Wasserbehälter(11) ansonsten versiegelt ist, so dass Wasser in die Kammer (3) in einer Richtung und Luft in den Behälter (11) in der entgegengesetzten Richtung über das Rohr (15) fließt, bis das Wasserniveau in der Kammer (3) über den Einlass (15) steigt und so den Durchfluss von Luft zurück in den Behälter (11) verhindert.

14. Babyflaschenwärmer nach Anspruch 13, wobei die Kammer (3) eine Seitenwand (6) und eine Basis (5) aufweist und der Einlass (15) in der Seitenwand (6), beabstandet von der Basis (5), gebildet ist.

## Revendications

1. Chauffe-biberon comprenant un corps (2) qui est positionnable, lorsqu'il est en cours d'utilisation, sur une surface de support de niveau, telle qu'une table, le corps (2) ayant une chambre (3) qui est destinée à recevoir un biberon à chauffer, ladite chambre (3) étant configurée de telle façon qu'une bouteille qui est reçue dans la chambre (3) soit supportée sous un angle par rapport à la surface de support sur laquelle le corps (2) est positionné, ladite chambre (3) comprenant également une paroi de base (5) et une paroi latérale (6), le chauffe-biberon comprenant également un dispositif de chauffage (4), **caractérisé en ce que** le dispositif de chauffage (4) est positionné sur ou d'une manière adjacente à la paroi de base de la chambre de telle façon que le chauffage du biberon mélange le contenu du biberon.

2. Chauffe-biberon selon la revendication 1, dans lequel le dispositif de chauffage est positionné sur ou d'une manière adjacente au point le plus bas de la chambre entre la paroi de base et la paroi latérale de telle façon que le chauffage du biberon mélange le contenu du biberon.

3. Chauffe-biberon selon la revendication 1 ou selon la revendication 2, dans lequel la chambre comprend des éléments de support de bouteille qui sont configurés de manière à supporter une bouteille qui est reçue sous un angle dans la chambre.

4. Chauffe-biberon selon la revendication 3, dans lequel la paroi de base (5) et la paroi latérale (6) sont configurées de manière à supporter une bouteille qui est reçue sous un angle dans la chambre (3).

5. Chauffe-biberon selon l'une quelconque des revendications précédentes 1 à 4, comprenant un organe de levage (26) qui est utilisable pour soulever une bouteille (20) au moins en partie hors de la chambre (3) afin d'éviter un nouveau autre chauffage de la bouteille (20).

6. Chauffe-biberon selon la revendication 5, dans lequel l'organe de levage (26) est configuré de telle façon qu'il soulève une bouteille (20) au moins en partie hors de la chambre (3) lorsque le contenu (24) de la bouteille (20) a atteint une température prédéterminée ou après qu'un temps prédéterminée s'est écoulé.

7. Chauffe-biberon selon la revendication 5 ou selon la revendication 6, comprenant un moteur qui est destiné à entraîner l'organe de levage (26) et un bouton de commande d'utilisateur qui est destiné à faire fonctionner le moteur.

8. Chauffe-biberon selon la revendication 5, 6 ou 7, dans lequel l'organe de levage comprend un ressort et un mousqueton qui est configuré de telle façon que, lorsqu'un utilisateur insère une bouteille (20) dans la chambre (3) et la pousse vers le bas contre une polarisation, de sorte que le mousqueton se met en prise, le mousqueton soit dégagé lorsqu'une température prédéterminée a été atteinte ou lorsqu'un temps prédéterminé s'est écoulé.

9. Chauffe-biberon selon l'une quelconque des revendications précédentes 1 à 8, dans lequel le dispositif de chauffage (4) chauffe une quantité prédéterminée d'eau (14) qui est placée dans la chambre (3) avant l'insertion d'une bouteille (20) à chauffer de telle façon que, lorsque la bouteille (20) est insérée dans la chambre (3), l'eau (14) constitue une couche (21) entre la bouteille (20) et les parois (5, 6) de la chambre (3).

10. Chauffe-biberon selon l'une quelconque des revendications précédentes 1 à 8, dans lequel la chambre (3) est cylindrique et dans lequel le dispositif de chauffage (4) est décalé par rapport à l'axe longitudinal de la chambre (3).

11. Chauffe-biberon selon l'une quelconque des revendications précédentes 1 à 10, comprenant en outre un réservoir d'eau (11) qui est relié à la chambre (3) de telle façon que de l'eau dans le réservoir d'eau (11) s'écoule dans la chambre (3) jusqu'à ce que l'eau (14) dans la chambre (3) atteigne un niveau prédéterminé avant l'insertion d'une bouteille (20) dans la chambre (3).

12. Chauffe-biberon selon la revendication 10, dans lequel le réservoir (11) est positionné au-dessus de la chambre (3) de telle façon que de l'eau s'écoule librement par gravité à partir du réservoir (11) dans la chambre (3) jusqu'à ce qu'un niveau d'eau prédéterminé ait été atteint.

13. Chauffe-biberon selon la revendication 10 ou selon la revendication 11, comprenant un tuyau (12) qui relie le réservoir d'eau (11) à un orifice d'entrée (15) dans la chambre (3), ledit réservoir d'eau (11) étant autrement scellé de telle façon que de l'eau circule dans la chambre (3) dans une direction, et dans lequel de l'air circule dans le réservoir (11) dans la direction opposée par le biais dudit tuyau (15) jusqu'à ce que le niveau d'eau dans la chambre (3) monte au-dessus de l'orifice d'entrée (15) et évite ainsi que l'air passe à nouveau dans le réservoir (11).

14. Chauffe-biberon selon la revendication 13, dans lequel la chambre (3) présente une paroi latérale (6) et une base (5) et dans lequel ledit orifice d'entrée (15) est formé dans ladite paroi latérale (6) qui est espacée de la base (5).
